(19) Europäisches Patentamt

European Patent Office

Office européen des brevets

(11) Veröffentlichungsnummer: **0 272 244 B1**

(12) **EUROPÄISCHE PATENTSCHRIFT**

(45) Veröffentlichungstag der Patentschrift: **03.06.92**

(51) Int. Cl.⁵: **G01H 13/00**, B06B 1/06

(21) Anmeldenummer: **87890281.6**

(22) Anmeldetag: **09.12.87**

(54) **Verfahren und Einrichtung zur Bestimmung von Schwingungseigenschaften sowie zum Betreiben eines piezoelektrischen Wandlers.**

(30) Priorität: **19.12.86 AT 3399/86**

(43) Veröffentlichungstag der Anmeldung:
**22.06.88 Patentblatt 88/25**

(45) Bekanntmachung des Hinweises auf die
Patenterteilung:
**03.06.92 Patentblatt 92/23**

(84) Benannte Vertragsstaaten:
**CH DE FR GB IT LI SE**

(56) Entgegenhaltungen:
**AT-B- 369 549**
**US-A- 3 832 630**

(73) Patentinhaber: **AVL Gesellschaft für Verbrennungskraftmaschinen und Messtechnik
mbH.Prof.Dr.Dr.h.c. Hans List
Kleiststrasse 48
A-8020 Graz(AT)**

(72) Erfinder: **Harms, Klaus-Christoph, Dr.
Attemsgasse 11
A-8010 Graz(AT)**
Erfinder: **Ruckenbauer, Friedrich, Dipl.-Ing.
Lessingstrasse 5
A-8010 Graz(AT)**

(74) Vertreter: **Pinter, Rudolf
Patentanwalt Dipl.-Ing. Rudolf Pinter Fasangasse 49/22
A-1030 Wien(AT)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Meßverfahren zur Bestimmung von Schwingungseigenschaften eines piezoelektrischen Wandlers, wobei aus einem elektrischen Eingangssignal mit veränderlich vorgebbarer Frequenz zwei aufeinander abzustimmende Teilsignale gleicher Frequenz erzeugt werden, deren eines unabhängig und deren anderes abhängig von den elektromechanischen Eigenschaften des zu untersuchenden Wandlers ist und aus denen durch Differenz bzw. Summenbildung ein Differenz-Ausgangssignal erzeugt wird, welches relativ zu einem ebenfalls aus dem Eingangssignal erzeugten Referenz-Ausgangssignal gemessen wird.

Die Erfindung betrifft weiters eine Einrichtung zur Bestimmung von Schwinungseigenschaften eines piezoelektrischen Wandlers zur Durchführung des obengenannten Verfahrens, mit einem Signalgenerator, der ein elektrisches Eingangssignal mit veränderlich vorgebbarer Frequenz an eine Abstimmeinheit liefert, die aus dem Eingangssignal zwei aufeinander abzustimmende Teilsignale gleicher Frequenz erzeugt, deren eines unabhängig und deren anderes über den an der Abstimeinheit angeschlossenen Wandler abhängig von den elektromechanischen Eigenschaften des zu untersuchenden Wandlers ist, einer damit in Verbindung stehenden Differenzbildungseinheit, die aus den beiden Teilsignalen ein Differenz-Ausgangssignal erzeugt, einer Referenzeinheit, die ebenfalls mit dem Signalgenerator in Verbindung steht und aus dem Eingangssignal ein Referenz-Ausgangssignal erzeugt, sowie einer Auswerteeinheit, die mit der Differenzbildungseinheit und der Referenzeinheit verbunden ist.

Schließlich betrifft die Erfindung auch noch die Verwendung des Verfahrens der genannten Art zum Betreiben eines piezoelektrischen Wandlers auf einer seiner Resonanzfrequenzen, wobei der Wandler mit einem elektrischen Antriebssignal von steuerbarer Frequenz versorgt wird.

Unter den angesprochenen piezolektrischen Wandlern sind im folgenden priär piezolektrische Druckaufnehmer, z.B. Quarzdruckaufnehmer, zu verstehen, obwohl alle Ausführungen natürlich auch auf andere derartige Wandler, so z.B. Accelerometer, Kikrophone, Hydrophone, piezoelektrische Stellglieder, Ultraschallsender, Lautsprecher, Elemente für Schreibmaschinentastaturen, usw., zutreffen.

Der allgemeine Begriff "Schwingungseigenschaften" soll hier auch den etwas deutlicheren Begriff "Resonanzcharakteristik" umfassen. Diese ist von der Bauart und Beschaffenheit des Wandlers abhängig, wobei diese Abhängigkeit so weit geht, daß bei entsprechendem Auflösungsvermögen auch Auswirkungen z.B. von Fertigungstoleranzen in der Resonanzcharakteristik erkannt werden können. Aus Abweichungen der Resonanzcharakteristik eines bestimmten Wandlers von einer für die Serie vorgebbaren Referenz-Charakteristik kann beispielsweise die Qualitätskontrolle fehlerhafte Wandler leicht erkennen und einer genauren Inspektion zuleiten. Weiters ist die Kenntnis der Resonanzcharakteristik natürlich zur Vermeidung von Meßfehlern von größter Bedeutung, da ja bei einer Anregung des Wandlers in der Nähe einer seiner Resonanzfrequenzen Resonanzüberhöhung auftritt und die Empfindlichkeit bei dieser Frequenz vom sonst konstanten Wert abweicht. Weiters machen sich auch Veränderungen am Wandler, z.B. aufgrund von Alterung, Abnützung oder Beschädigung, in der Resonanzcharakteristik bemerkbar. Aus einem Vergleich der aktuellen Messung mit der gespeicherten Messung von früher kann somit Aufschluß über die Art der Veränderung erhalten werden. Als weiteres Beispiel ist die Entwicklung hochdynamischer Wandler zu nennen, wobei die Resonanzcharakteristik eine gute Basis zur Bewertung der Verbesserungen, z.B. bei der Unterdrückung unerwünschter niederfrequenter Resonanzen, bietet.

Die Resonanzcharakteristik wird aber nicht nur durch den Wandler selbst, sondern auch durch dessen akustisch gekoppelte Umgebung bestimmt. Der Grad der Koppelung und die akustischen Eigenschaften und Schwingungsmoden der Umgebung drücken sich in der gemessenen Resonanzcharakteristik aus und können demnach aus dem Vergleich mit der Charakteristik des freien, akustisch nicht gekoppelten Wandlers erkannt werden. Ähnlich kann auch der häufig stark ausgeprägte Einfluß eines Koppelmediums, z.B. Luft oder Öl, aus der Resonanzcharakteristik ermittelt werden.

Meßverfahren bzw. Einrichtungen zur Bestimmung von Schwingungseigenschaften eines piezoelektrischen Wandlers, wie sie eingangs beschrieben sind, sind beispielsweise aus der AT-B-369.549 bekannt. Die Grundidee dabei ist, daß man einen beispielsweise als Resonanzdetektormodul ansprechbaren Elektronikeinschub über einen Frequenzgenerator bzw.-synthesizer mit einem Eingangssignal von veränderlich vorgebbarer Frequenz anspeist und die zufolge der piezoelektrischen Eigenschaften des an diesem Modul angeschlossenen zu prüfenden Wandlers auftretende elektrische Rückwirkung relativ zu einem ebenfalls auf dem Eingangssignal basierenden Referenzsignal bestimmt. Aus dem Eingangssignal werden zwei Teilsignale erzeugt, von denen eines unabhängig vom zu prüfenden Wandler ist und von denen das andere abhängig von den tatsächlich zum Zeitpunkt der Messung gegebenen elektromechanischen Eigenschaften des angeschlossenen Wandlers ist. Dies kann beispielsweise mittels eines Spannungsteilers geschehen, bei dem der zu prüfende Wandler an geeigneter Stelle inkorporiert ist. Soferne die beiden Teilsignale im wesentlichen gleichphasig sind, kann durch Differenzbildung das die Rückwirkung charakterisierende Differenz-Ausgangssignal erzeugt werden; bei im wesentlichen gegenphasigen Teilsignalen wird das die Rückwirkung des Wandlers charakterisierende Differenz-Ausgangssignal durch Summenbildung erhalten. In allen Fällen wird dabei stets die reine Signal-Amplitudenänderung als Maß für die zu bestimmenden Schwingungseigenschaften herangezogen.

Derartige bzw. ähnlich aufgebaute Meßanordnungen werden auch zur Prüfung bzw. zur Bestimmung der Resonanzcharakteristik von heutzutage in ständig steigendem Ausmaß verwendeten Schwingquarzen verwendet, welche sich allerdings in verschiedener Hinsicht ganz deutlich von den sogenannten piezoelektrischen Wandlern unterscheiden. So liegen die Frequenz, bei denen piezoelektrische Wandler betrieben werden, zumeist im Berich von 0 bis etwa 400 oder 500 kHz, wogegen üblicherweise Schwingquarze erst bei den genannten Obergrenzen für die Frequenz anfangen. Weiters sind Schwingquarze auf eine relativ sehr viel bessere Koppelung optimiert, daß heißt, die elektrostatische Kapazität des Schwingsquarzes gegenüber den die piezoelektrische Rückwirkung charakterisierenden Ersatzschaltbildkomponenten ist in keinem so ungünstigen Verhältnis wie bei den piezoelektrischen Wandlern, welche üblicherweise große träge Massen, die durch den im Wandler erforderlichen Übertragungskörper und dergleichen bedingt sind, und demgegenüber aber nur ein geringes aktives piezoelektrisches Volumen haben. Die Summe von Elektrodenkapazität plus Kabelkapazität liegt für typische Wandler in der Größenordnung von vielleicht 30 bis 500 pF, wogegen die im Fall einer kapazitiven Meßrücke für die Auswertung der Rückwirkung zu messende Kapazität in der Größenordnung von vielleicht 10 bis 500 fF - also etwa um einen Faktor 1000 tiefer - liegt. Die Auswertung derart kleiner Signale stellt besonders hohe Anforderungen an das Meßverfahren bzw. an die verwendt Einrichtung, welche sich mit der bekannten Anordnung bei sinnvollem Aufwand nur in begrenztem Maße erfüllen lassen.

Ausgehend von den obigen Ausführungen ist es also Aufgabe der vorliegenden Erfindung, ein Meßverfahren sowie eine Einrichtung zur Bestimmung von Schwingungseigenschaften und insbesonders zur Bestimmung der Resonanzcharakteristik eines piezoelektrischen Wandlers anzugeben, mit dem bzw. mit der die genannten Nachteile vermieden werden können, wobei insbesonders auf einfache Weise die Genauigkeit und die Aussagekraft der Messung erhöht werden soll.

Eine weitere Aufgabe der vorliegenden Erfindung besteht darin, ein Verfahren zum Betrieben eines piezoelektrischen Wandlers auf einer seiner Resonanzfrequenzen, wobei der Wandler mit einem elektrischen Antriebssignal von steuerbarer Frequenz versorgt wird, anzugeben, wobei die Schwierigkeiten, die sich aus der geringen Kopplung und aus dem ungünstigen Verhältnis der relativ großen Lastkapazität des Wandlerersatzschaltbildes und der extrem kleinen Wirkkapazität ergeben, auf einfache und kostengünstige Weise beseitigt werden sollen.

Gemäß der Erfindung werden die genannten Aufgaben bei einem Meßverfahren zur Bestimmung von Schwingungseigenschaften eines piezoelektrischen Wandlers dadurch gelöst, daß die Abstimmung der beiden Teilsignale bei der Messung ständig und mittels einer Soll-Istwertregelung des mit dem Referenz-Ausgangssignal in Phase bzw. in Gegenphase liegenden Anteils des Differnz-Ausgangssignals auf Null vorgenommen wird, und daß der verbleibende, im wesentlichen um 90 Grad zum Referenz-Ausgangssignal phasenverschobene Anteil des Differenz-Ausgangssignals als Maß für die Resonanzcharakteristik des Wandlers dient.

Es wird damit also für die erfindungsgemäße Ausgestalltung des Meßverfahrens konsequent Gebrauch gemacht von den physikalischen Zusammenhängen bei schwingungsfähigen Systemen. Wird der piezoelektrische Wandler, der notwendigerweise ein schwingungsfähiges System darstellt, zu mechanischen bzw. akustischen Schwingungen angeregt (über das Eingangssignal) so erzeugt der Wandler bzw. das piezoelektrische Wandlerelement aufgrund des direkten Piezoeffekts ein elektrisches Ladungssignal, das proportional zur Deformation des piezoelektrischen Elements ist. Wenn die Anregungsfrequenz in der Nähe einer der Resonanzfrequenzen des Wandlers liegt, tritt Resonanzüberhöhung auf, was bedeutet, daß die Empfindlichkeit - damit wird im allgemeinen das für den Wandler charakteristische Verhältnis von Ausgangs- zu Eingangssignalamplitude bezeichnet - bei dieser Frequenz vom ansonsten konstanten Wert abweicht. Diese Abweichung erfolgt nach Betrag und Phase, also nicht nur im Amplitudenverhältnis von Ausgangs- zu Eingangssignal, sondern auch in der Phasenlage der beiden Signale zueinander. Als Wandlerempfindlichkeit im engeren Sinn ist nun der Betrag der komplexwertigen Empfindlichkeitfunktion zu verstehen. Wenn der Betrag der Empfindlichkeit durch Resonanzüberhöhung vom sonst konstanten Wert abweicht, so tritt diese Resonanz im Realteil ebenfalls als mehr oder weniger große Abweichung vom konstanten Teil der Empfindlichkeit in Erscheinung; in der Darstellung des Imaginärteils tritt die Resonanz aber als Abweichung von Null und daher äußerst deutlich in Erscheinung.

Der Imaginärteil des Differenz-Auggangssignals bzw. der in Quadratur - 90 Grad Phasenverschiebung - zum Referenz-Ausgangssignal liegende Anteil des Differenz-Ausgangssignals charakterisiert den dissipativen Teil der Empfindlichkeitsfunktion, der dem mittleren Energieverlust pro Schwingungsperiode proportional ist. Bei Eingangsfrequenzen weit weg von einer Resonanzfrequenz des Wandlers sind die Verluste und damit der dissipative Teil der Empfindlichkeitsfunktion verschwindend klein gegen die Maxima der Verlustleistung, die bei den Resonanzfrequenzen auftreten. Eine Erklärung für die gefundene nahezu vollständige Übereinstimmung der gemessenen Resonanzcharakteristik mit dem dissipativen Teil der Empfindlichkeitsfunktion ist darin zu sehen, daß praktisch keine elektrischen Verluste auftreten. Obwohl die elektromechanische Koppelung relativ ist, sind die dielektrischen Verluste vernachlässigbar. Weiters kann das elektrische Ausgangssignal mit modernen elektronischen Bauteilen nahezu leistungslos gemessen werden. Die auftretenden Verluste werden also fast ausschließlich durch die Dämpfung der mechanischen Schwingungen erzeugt.

Die Zusammenhänge zwischen der genannten komplexen Empfindlichkeitsfunktion und der eigentlichen Resonanzcharakteristik lassen sich durch die folgenden Ausführungen zu den in diesem Zusammenhang verwendeten physikalischen Einheiten noch deutlicher machen: in pC/bar wird z.B. die Empfindlichkeit eines piezoelektrischen Drucksensors angegeben, der bei einem wirkenden Druck von einem bar eine bestimme elektrische Ladungsmenge gemessen in pC aufgrund des Piezoeffekts erzeugt. In fC/V wird die Resonanzcharakteristik dieses Drucksensors angegeben, weil er bei einem wirkenden elektrischen Anregungssignal von einem Volt eine bestimmte elektrische Ladungsmenge, gemessen in fC, aufgrund der piezoelektrischen Rückwirkung erzeugt. Demnach müßte in kV/bar der für jeden Wandler spezifische Umrechnungsfaktor gemessen werden, mit dessen Hilfe man die gemessene Resonanzcharakteristik in das entsprechende Spektrum der Druckempfindlichkeit umrechnen könnte. Dieser Umrechnungsfaktor ist für tiefe Frequenzen konstant und berücksichtigt die im Wandler wirksamen piezoelektrischen und dielektrischen Konstanten und verschiedene Geometriefaktoren, wie z.B. effektive Membranfläche, Elektrodenfläche und Dicke der piezoelektrischen Plättchen. Bei höheren Frequenzen ergeben sich Abweichungen vom Niederfrequenzwert, welche bedingt sind durch den Umstand, daß die mechanischen Schwingungen, die für die Resonanzen verantwortlich sind, an verschiedenen Orten im Wandler angeregt werden. Im vorleigenden Falle erfolgt die Anregung im piezoelektrischen Wanderelement, wogegen z.B. bei einer Druckmessung mit einem Quarzdruckaufnehmer die Anregung an der Membrane erfolgt. Je geringer nun die Distanz zwischen den zwei Orten der Anregung ist, desto höher kann die Frequenz angesetzt werden, bis zu der ein konstanter Umrechnungsfaktor angenommen werden kann.

Der mit dem Referenz-Ausgangssignal in Phase bzw. in Gegenphase (180 Grad verschoben) liegende Anteil des Differenz-Ausgangssignals - der dem Realteil der komplexwertigen Empfindlichkeitsfunktion proportional ist - wird also beim erfindungsgemäßen Meßverfahren nicht unmittelbar für die Bestimmung der Resonanzcharakteristik benötigt, sondern zur Abstimmung der beiden Teilsignale bei einer Messung herangezogen. Die Istgröße dieses mit dem Referenz-Ausgangssignal in Phase bzw. Gegenphase liegenden Anteils des Differenz-Ausgangssignals wird mit dem Solwert Null verglichen, worauf bei Abweichung vom Sollwert das Abstimmverhältnis entsprechend geändert wird.

Aus den obigen Ausführungen ist ersichtlich, daß die gegenseitigen Phasenlagen des Referenz-Ausgangssignals und des Differenz-Ausgangssignals wesentlich für die Durchführung des erfindungsgemäßen Meßverfahrens sind; unwichtig ist aber beispielswiese, wo das Referenz-Ausgangssignal aus dem Eingangssignal abgeleitet wird bzw. welche Phasenbeziehung zum Eingangssignal besteht, sowie auch, ob die verwendeten elektronischen Bauteile für die Spannungsteiler bzw. allfällige Filter oder dergleichen phasendrehend sind oder nicht, solange nur sichergestellt ist, daß die genannte Phasenbeziehung zwischen dem Referenz-Ausgangssiglnal und dem Differenz-Ausgangssignal an der Abzweigung des die Istgröße für die Regelung der Abstimmung darstellenden Signals gilt. So kann man beispielsweise von einem keine Phasendrehung verursachenden kapazitiven Spannungsteiler und einem mit dem Eingangssignal gleichphasigen Referenz-Ausgangssignal ausgehen - denkbar ist aber auch die Verwendung von Spannungsteilern die RC-Glieder enthalten, welche phasendrehend sind. Wenn in diesem Falle das Referenz-Ausgangssignal bezüglich seiner Phasenlage nicht angepaßt wird, so müßte die Sollgröße für die genannte Amplitudenregelung im allgemeinen von Null abweichend sein. In jedem Fall ist zu fordern, daß der Ausgang des Differenzverstärkers in möglichst guter Näherung nur mehr abhängig ist vom Imaginärteil der Wandlerkapazität und daß der Einfluß, den der Realteil der Wandlerkapazität auf das Differenz-Ausgangssignal nimmt, verschwinden soll. Die Änderung der Sollgröße auf einen Wert ungleich Null ist in diesem Zusammenhang gleichbedeutend mit der Berücksichtigung einer anderen Phasenreferenz die für die Bestimmung der auf die Phase des Referenz-Ausgangssignals bezogenen Amplitude des Differenz-Ausgangssignals ohnedies erforderlich ist.

Die Einrichtung zur Bestimmung von Schwingungseigenschaften eines piezoelektrischen Wandlers, die eingangs ebenfalls bereits beschrieben ist, ist gemäß der Erfindung so ausgebildet, daß die Abstimmeinheit mit einer selbsttätigen Regeleinheit verbunden ist, welche aus dem Vergleich der Istgröße des mit dem Referenz-Ausgangssignal von den Referenzeinheit in Phase bzw. in Gegenphase liegenden Anteils des Differenz-Ausgangssignals der Differenzbildungseinheit mit der Sollgröße Null eine Stellgröße für die Abstimmeinheit liefert. Diese selbsttätige Regeleinheit ist also im wesentlichen nur mit einem Eingang für die Istgröße des mit dem Referenz-Ausgangssignal in Phase bzw. Gegenphase liegenden Anteils des Ausgangs der Differenzbildungseinheit und mit einem Ausgang für die entsprechende Stellgröße zur Nachregelung der Abstimmeinheit versehen. Bezüglich der näheren Erklärung der einzelnen Elemente der Einrichtung sowie ihrer Zusammenwirkung wird auch auf die obigen Ausführungen im Zusammenhang mit der Beschreibung des Meßverfahrens verweisen.

Als besonderer Vorteil des erfindungsgemäßen Meßverfahrens ist schließlich noch anzusehen, daß daraus ein Verfahren zum Betreiben eines piezoelektrischen Wandlers auf einer seiner Resonanzfrequenzen ableitbar ist, welches sich das beschriebene Prinzip der Regelung der Abstimmung der beiden Teilsignale auf einfache Weise zu Nutze macht. Das eingangs bereits beschriebene Verfahren ist demnach gemäß der Erfindung so ausgestaltet, daß aus dem Antriebssignal zwei aufeinander abzustimmende Teilsignale gleicher Frequenz erzeugt werden, deren eines unabhängig und deren anderes abhängig von den elektromechanischen Eigenschaften des Wandlers ist, und aus denen durch Differenz- bzw. Summenbildung ein Differenz-Ausgangssignal erzeugt wird, welches relativ zu einem ebenfalls aus dem Antriebssignal erzeugten Referenz-Ausgangssignal gemessen wird, daß die Abstimmung der beiden Teilsignale während des Betriebes ständig und mittels einer Soll-Istwertregelung des mit dem Referenz-Ausgangssignal in Phase bzw. in Gegenphase liegenden Anteils des Differenz-Ausgangssignals auf Null vorgenommen wird, und daß der verbleibende Anteil des Differenz-Ausgangssignals bestimmt und mittels Regelung der Frequenz des Antriebssignals laufend maximiert wird. Es wird also im wesentlichen lediglich der Signalgenerator der oben beschriebenen Meßeinrichtung durch einen VCO (Voltage Controled Oscillator) ersetzt und der imaginäre Teil der Wandlerkapazität erzeugt über einen Maximumregler die erforderliche Stellgröße für diesen VCO, sodaß sich die Frequenz desselben so einstellt, daß das Ausgangssignal immer im Maximum ist. Damit wird am VCO eine Frequenz gehalten, nämlich die Resonanzfrequenz des Wandlers. Um eine bestimmte von vielen Resonanzfrequenzen auszufiltern ist nur noch an irgendeiner Stelle ein geeignetes Filter einzuschalten. Damit kann auf einfache Weise die Resonanzfrequenz bzw. eine gewünschte Resonanzfrequenz des Wandlers festgehalten werden, um beispielsweise deren Änderung in Abhängigkeit von Druck, Temperatur oder einwirkenden physikalischen Größen zu bestimmen. Es ist durch die genannten Maßnahmen trotz geringer Koppelung und relativ großer Kabel- und Elektrodenkapazitäten ein aktiv betreibender Oszillator realisiert, wie er ansonsten nur mit relativ großem Schaltungsaufwand darstellbar ist.

Beim erfindungsgemäßen Meßverfahren kann nach einer weiteren Ausgestaltung vorgesehen sein, daß zur Abstimmung beide Teilsignale so verändert werden, daß die Summe konstant ist, daß weiters das Referenz-Ausgangssignal aus einem der beiden abgestimmten Teilsignale erzeugt und bezüglich seiner Amplitude gemessen wird, und daß aus dem Verhältnis dieser Amplitude zur Amplitude des Eingangssignals das Abstimmverhältnis ermittelt und zur numerischen Auswertung des Meßergebnisses verwendet wird. Es werden also beide Teilsignale verändert und zwar so, daß diese Veränderung der Gleichung: Summe = konstant, gehorcht, womit man bei Ableitung des Referenz-Ausgangssignals von einem der beiden bereits abgestimmten Teilsignale rückschließen kann auf die beiden Signalgrößen und damit auf das Abstimmverhältnis.

Ohne Kenntnis des Abstimmverhältnisses könnte die gemessene Amplitude des Differenz-Ausgangssignals nicht unmittelbar in das eingangs angesprochene gewünschte Maß für die Resonanzcharakteristik, das unabhängig von der Amplitude des Anregungssignals und unabhängig von der Größe des Realteils der Wandlerkapazität sein soll, umgerechnet werden. Hingegen kann aus der Kenntnis der Amplitude des Eingangssignals und der gemessenen Amplitude eines der beiden Teilsignale mit Hilfe der Bestimmungsgleichung - Summe ist konstant und proportional der Eingangsamplitude - das Abstimmverhältnis ermittelt werden; damit und aus der Kenntnis des bei der Aufteilung in die beiden Teilsignale wirksamen Referenzelementes sowie des Teilverhältnisses des Referenzzweiges kann der Realteil der Wandlerkapazität bestimmt und zur Umrechnung der Amplitude des Differenz-Ausgangssignals in das gewünschte Maß für die Resonanzcharakteristik verwendet werden.

Gemäß einer besonders bevorzugten weiteren Ausgestaltung der Erfindung ist vorgesehen, daß bei der Messung des verbleibenden Differenz-Ausgangssignals nur der 90 Grad zum Referenz-Ausgangssignal phasenverschobene Anteil gemessen wird. Das bedeutet, daß auch bei der Auswertung noch einmal eine Demodulation auf den imaginären Teil erfolgt, obwohl ja theoretisch eigentlich nur mehr der imaginäre Teil übrig ist. Damit können Störsignale und Rauschen im Meßsignal verringert werden.

Die Messung des verbleibenden Differenz-Ausgangssignals wird nach einer anderen vorteilhaften Weiterbildung der Erfindung schmalbandig bei der Frequenz des Eingangssignals vorgenommen, womit ebenfalls die vor allem auf Netzbrumm und Rauschen zurückgehenden Störsignale unterdrückt werden.

Die Einrichtung zur Bestimmung von Schwingungseigenschaften eines piezoelektrischen Wandlers ist in weiterer Ausgestaltung der Erfindung derart weitergebildet, daß die Regeleinheit zur Zuführung der zur Regelung dienenden Istgröße mit einem Phasenmesser, vorzugswiese einem Snychron-Demodulator, verbunden ist, der seinerseits mit der Differenzbildungseinheit zur Zuführung des Differenz-Ausgangssignals in Verbindung steht. Da der Ausgang der Differenzbildungseinheit nahezu Null und daher stark verrauscht ist, besteht bei üblichen Phasen messern die Gefahr einer Fehfunktion bzw. Fehlmessung. Um auch aus einem extrem stark verrauschten Signal noch eine Phasenlage herausfiltern zu können, muß man sehr schmalbandig messen, was eben mit dem Synchron-Demodulator geschieht, womit man auf einfache Weise die Meßgenauigkeit und Sicherheit erhöhen kann.

Nach einer weiteren Ausgestaltung der Erfindung ist vorgesehen, daß die Regeleinheit im wesentlichen von einem Integralregler gebildet ist, der vorzugsweise zur Erhöhung seiner Stabilität und Schnelligkeit auch Proportional-und/oder Differentialanteile aufweist, womit die Ausregelung auf tatsächlich keine Abweichung mehr zwischen Istwert und Sollwert möglich ist.

Die Abstimmeinheit kann nach einer bevorzugten weiteren Ausgestaltung der Erfindung als eigentliches Abstimmelement eine mit der Regeleinheit verbundene Kapazitätsdiode enthalten, deren Kapazität über die Stellgröße veränderlich ist. Damit wird auf einfache Weise die Abstimmung über ein einzelnes kostengünstiges Element möglich. Ähnliche Vorteile ergeben sich, wenn man nach einer weiteren Ausgestaltung der Erfindung als eigentliches Abstimmelement einen mit der Regeleinheit verbundenen Feldeffekt-Transistor vorsieht, dessen Drain-Source-Widerstand über die Stellgröße veränderlich ist. In beiden Fällen werden mit Hilfe dieser elektronischen Bauelemente spannungsgesteuerte Verstärker oder Abschwächer aufgebaut, die entsprechend einer angelegten Steuerspannung eine Signalamplitude verändern.

Nach einer weiteren Ausgestaltung der Erfindung ist vorgesehen, daß die Abstimmeinheit als eigentliches Abstimmelement einen mit der Regeleinheit verbundenen Steilheitsverstärker enthält, dessen Verstärkung über die Stellgröße veränderlich ist. Da ein derartiges Bauelement relativ kostengünstig als integrierter Baustein auf dem Markt erhältlich ist, ist damit eine einfache und preiswerte Ausführung der Abstimmeinheit ermöglicht.

Die Abstimmeinheit kann nach einer anderen Weiterbildung der Erfindung als eigentliches Abstimmelement aber auch einen mit der Regeleinheit verbundenen, zwei emittergekoppelte Transistoren aufweisenden Differenzverstärker enthalten, wobei die Stellgröße auf die Aufteilung eines aus dem Eingangssignal erzeugten Stromsignals in die den beiden Teilsignalen entsprechenden Emitterströme der zwei Transistoren des Differenzverstärkers wirkt. Auch dies ist eine einfache Möglichkeit zur Realisierung der Abstimmung der der Differenzbildungseinheit zuzuführenden beiden Teilsignale.

Zur Verbesserung des Regelverhaltens kann die Stellgröße auch logarithmiert werden, wozu gemäß einer anderen Weiterbildung der Erfindung zwischen Regeleinheit und Abstimmeinheit eine Logarithmiereinheit eingeschaltet ist. Differenzverstärker haben im Großsignalverhalten zumeist eine logarithmische Kennlinie, der man durch diese genannte Maßnahme sehr einfach im Sinne einer Linearisierung entgegenwirken kann.

Nach einer besonders bevorzugten weitern Ausbildung der Erfindung ist im Zusammenhang mit der Abstimmung über den obengenannten Differenzverstärker vorgesehen, daß in der Abstimmeinheit dem genannten ersten zur Stromaufteilung dienenden Differenzverstärker ein zweiter, zwei weitere emittergekoppelte Transistoren umfassender Differenzverstärker parallel geschaltet ist, wobei in diesem ein Konstantstrom, der dem mittleren Ruhestrom des aus dem Eingangssignal erzeugten Stromsignals entspricht, im gleichen Verhältnis wie im ersten Differenzverstärker in zwei weitere Teilströme geteilt sind, die jeweils mit einem der beiden Teilströme des ersten Differenzverstärkers additiv zusammengefaßt werden, sodaß die mittleren Ruheströme der beiden resultierenden Teilströme im wesentlichen unabhängig von einer durch die Regelung verursachten Änderung des Verhältnisses der Stromaufteilung sind. Durch diesen zweiten Differenzverstärker ist aus einfache Weise eine Möglichkeit zur Kompensation von Regelschwingungen gegeben, die ansonsten mit der vollen Verstärkung des Differenzverstärkers im Ausgangssignal auftreten würden. In Bezug auf das Eingangssignal, wleches in ein Stromsignal umgewandelt wurde, sind beide Ausgänge der Abstimmeinheit gleichphasig. In Bezug auf Regelschwingungen, die auf die Stellgröße wirken, sind diese beiden Ausgänge aber gegenphasig. Die gleichphasigen Signale werden in der Differenzbildungseinheit auf Null substrahiert; die gegenphasigen Signale allerdings in der genannten Weise verstärkt. Mit den genannten Elementen bzw. Maßnahmen kann also eine Unterdrückung dieser Regelschwingungen vorgenommen werden.

Dem Ausgang der Differenzbildungseinheit sowie dem Ausgang der Referenzeinheit können nach einer weiteren Ausgestaltung der Erfindung aufeinander abgestimmte Frequenzband-Filter nachgeschaltet sein, was wiederum zur Unterdrückung von Störsignalen und damit zu einer Erhöhung der Meßgenauigkeit führt.

Der Vollständigkeit halber sei hier auch darauf verwiesen, daß die genannten Phasenbeziehungen eigentlich nur für ideale Bauelemente bzw. Schaltungsaufbauten zutreffen, und daß zur Korrektur der tatsächlich auftretenden geringen Phasendrehungen infolge von z.B. Laufzeiten und Streukapazitäten an geeigneten Stellen Abstimmelemente vorgesehen werden können.

Die Erfindung wird im folgenden anhand der in der Zeichnung dargestellten schematischen Schaltbilder von beispielhaften Ausführungen näher erläutert. Dabei zeigt

Fig. 1 eine Anordnung nach dem Stand der Technik,

Fig. 2 eine Einrichtung zur Bestimmung von Schwingungseigenschaften eines piezoelektrischen Wandlers gemäß der Erfindung,

Fig. 3 ein Ausführungsbeispiel einer Abstimmeinheit für die beiden Teilsignale,

Fig. 4 einen Teil eines anderen Ausführungsbeispiels nach der Erfindung,

Fig. 5 eine Einrichtung zum Betreiben eines piezoelektrischen Wandlers in einer Ausbildung nach der vorliegenden Erfindung und

Fig. 6 eine der fig. 2 entsprechende Einrichtung nach der Erfindung in etwas detaillierterer Darstellung.

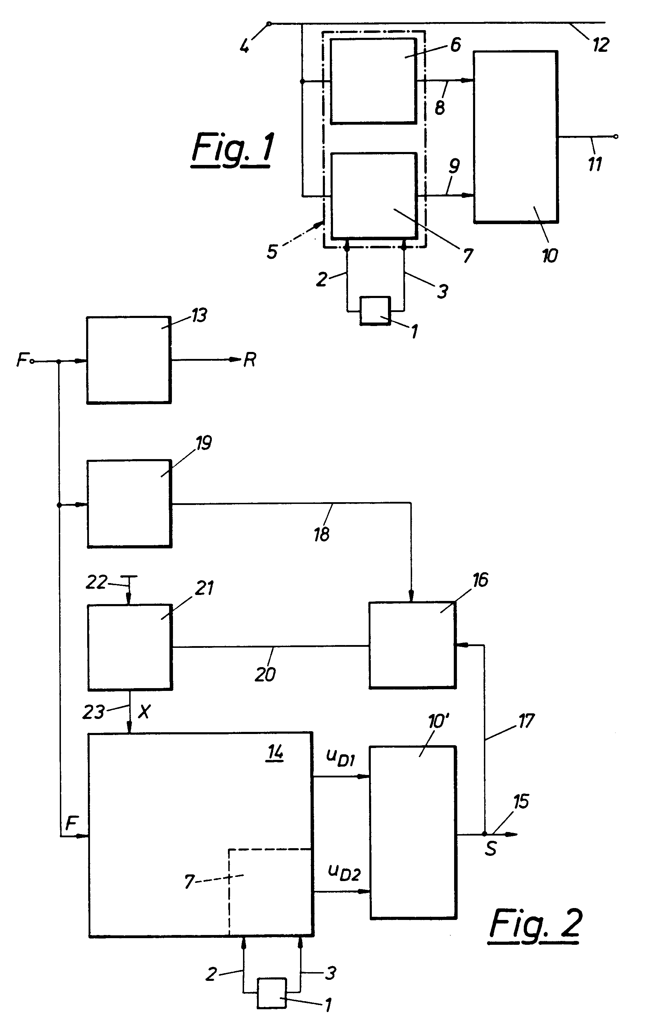

Die in Fig. 2 dargestellte Einrichtung dient zur Bestimmung von Schwingungseigenschaften und insbesonders der Resonanzcharakteristik eines piezoelektrischen Wandlers 1, der über Anschlußleitungen 2, 3 zur Durchführung der Bestimmung anschließbar ist. Über einen hier nicht dargestellten Signalgenerator wird ein elektrisches Eingangssignal mit veränderlich vorgebbarer Frequenz an einen Eingang 4 der Einrichtung gelegt. Aus diesem Eingangssignal werden über zwei in einer Abstimmeinheit 5 zusammengefaßte Spannungsteiler 6, 7 aufeinander abzustimmende Teilsignale gleicher Frequenz erzeugt. Das Teilsignal des in der Darstellung oberen Spannungsteilers 6 ist vom Wandler 1 unabhängig; das Teilsignal des unteren Spannungsteilers 7 ist über den an der Abstimmeinheit 5 bzw. am Spannungsteiler 7 angeschlossenen Wandler 1 abhängig von den elektromechanischen Eigenschaften desselben. Über Leitungen 8, 9 werden die beiden Teilsignale einem Differenzverstärker 10 zugeführt, dessen Ausgang 11 mit einer hier nicht dargestellten Auswerteeinheit in Verbindung steht.

Eine hier nicht dargestellte Referenzeinheit, die ebenfalls mit dem am Eingang 4 anliegenden Signalgenerator in Verbindung steht und aus dem Eingangssignal ein Referenz-Ausgangssignal erzeugt, ist über eine Leitung 12 ebenso wie der Ausgang 11 mit der Auswerteeinheit verbunden.

Im Differenzverstärker 10 wird aus den beiden von den Spannungsteilern 6, 7 gelieferten Teilsignalen durch Differenzbildung ein Differenz-Ausgangssignal erzeugt, welches in der Auswerteeinheit relativ zu dem Referenz-Ausgangssignal gemessen wird. Durch entsprechende Abstimmung der beiden Spannungsteiler, welche gemäß dem Stand der Technik in Form eines Abgleichs vor der Messung vorgenommen wird, kann in gewissen Grenzen erreicht werden, daß das am Ausgang 11 zur Verfügung stehende Differenz-Ausgangssignal bzw. das bereits in Bezug zum Referenz-Ausgangssignal gesetzte Meßsignal im wesentlichen nur mehr die Rückwirkung des geprüften piezoelektrischen Wandlers 1 auf die Anregung durch das Eingangssignal repräsentiert.

Anstelle des Differenzstärkers 10 kann bei dieser bekannten Ausführung natürlich auch eine Summierverstärker verwendet werden, soferne nur in einem der Wege der beiden Teilsignale eine Phasendrehung um 180 Grad hervorgerufen wird.

Die in Fig. 2 dargestellte Einrichtung zur Bestimmung der Resonanzcharakteristik eines piezoelektrischen Wandlers 1 is wiederum mit einem nicht dargestellten Signalgenerator versehen, der ein elektrisches Eingangssignal F mit veränderlich vorgebbarer Frequenz liefert. Aus diesem Eingangssignal F wird einerseits an einer Referenzeinheit 13 ein Referenz-Ausgangssignal R erzeugt, welches einer wiederum nicht dargestellten Auswerteeinheit zugeführt wird. Andererseits wird das Eingangssignal F einer Abstimmeinheit 14 zugeführt, die daraus zwei aufeinander abzustimmende Teilsignale $u_{D1}$ und $u_{D2}$ von gleicher Frequenz erzeugt. Das Teilsignal $u_{D1}$ ist wiederum unabhängig vom angeschlossenen piezoelektrischen Wandler 1; das Teilsignal $u_{D2}$ ist über den am strichliert angedeuteten Spannungsteiler 7 angeschlossenen piezoelektrischen Wandler 1 abhängig von den elektromechanischen Eigenschaften und insbesonders von der Resonanzcharakteristik des Wandlers. Eine als Differenzverstärker - bzw. bei 180 Grad phasenversetzten Teilesignalen also Summierverstärkerausgebildete Differenzbildungseinheit 10' erzeugt aus den beiden Teilsignalen $u_{D1}$ und $u_{D2}$ Differenz-Ausgangssignal S, welches über eine Ableitung 15 ebenso wie das Referenz-Ausgangssignal R der nicht dargestellten Auswerteeinheit zugeführt ist.

Ein als Synchron-Demodulator 16 ausgebildeter Phasenmesser wird über eine Leitung 17 mit dem Differenz-Ausgangsignal S versorgt und steht anderseits über eine Leitung 18 mit einer Einheit 19 zur Erzeugung einer Phasenreferenz aus dem Eingangssignal F in Verbindung. Über den Synchron-Demodulator 16 wird der mit dem Referenz-Ausgangssignal R der Referenzeinheit 13 in Phase bzw. in Gegenphase liegende Anteil des Differenz-Ausgangssignals S der Differenzbildungseinheit 10′ aus dem Signal S ausgewählt und als Istgröße über eine Leitung 20 einer Regeleinheit 21 zugeführt. Über einen Eingang 22 kann an der Regeleinheit 21 eine Solgröße vorgegeben werden - hier beispielsweise Null - welche dann in der Regeleinheit zum Vergleich mit der Istgröße dient. Abweichungen zwischen Sollgröße and Istgröße beeinflussen eine Stellgröße X, die über eine Leitung 23 der Abstimmeinheit 14 zugeführt wird und dort auf nicht dargestellte Weise zur Änderung der Abstimmung bzw. zue Änderung der Aufteilung in die beiden Teilsignale $u_{D1}$ und $u_{D2}$ führt.

Durch die beschriebene ständig Nachregelung der Istgröße-das ist der den Realteil der komplexen Empfindlichkeitsfunktion repräsentierende, mit dem Referenz-Ausgangssignal R in Phase liegende Anteil des Differenz-Ausgangssignals S - auf die Solgröße Null ist erreicht, daß an der Auswerteeinheit nur ein Signal proportional zum Imaginärteil der komplexen Empfindlichkeitsfunktion, der wie beschrieben die Rückwirkung des piezoelektrischen Wandlers und damit dessen Resonanzcharakteristik sehr präzise charakterisiert, übrig bleibt, was auf einfache Weise sehr genaue Messungen erlaubt.

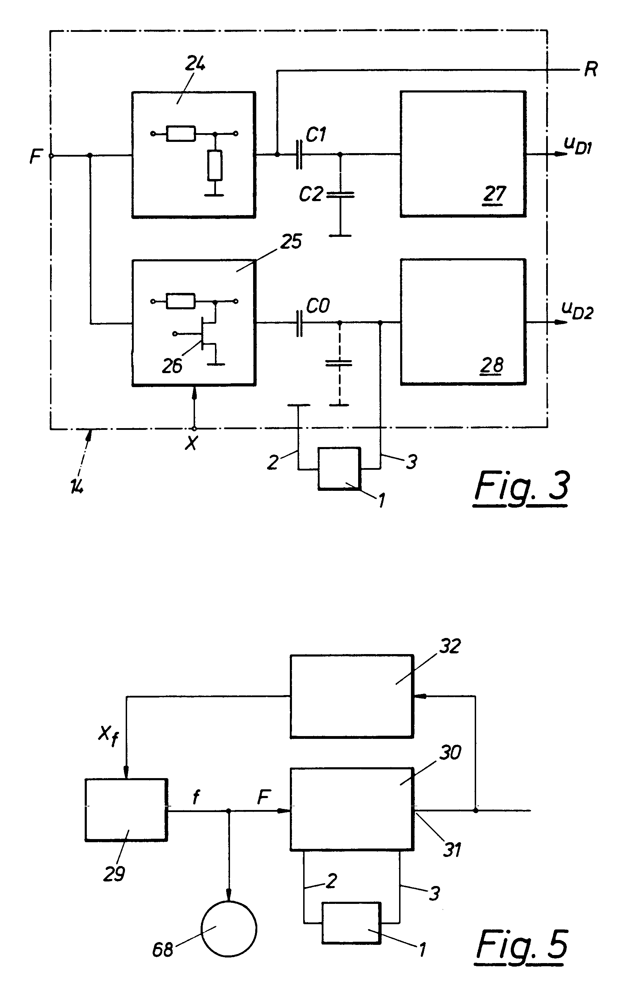

In Fig. 3 ist ein Ausführungsbeispiel für die Abstimmeinheit 14 näher dargestellt. Das Eingangssignal F wird aufgeteilt und gelangt auf separaten Wegen an die beiden Baugruppen 24, 25 zur Steuerung der Amplitudenverhältnisse der beiden Teilsignale. Im dargestellten Beispiel handelt es sich um ohmsche Spannungsteiler, von denen der in der Baugruppe 25 einen Feldeffekt-Transistor 26 aufweist, dessen Drain-Source-Widerstand über die Stellgröße X veränderbar ist. Nachfolgend an die Baugruppen 24, 25 sind hier kapazitive Spannungsteiler $C_1$, $C_2$ und $C_0$ mit Kapazität des Wandlers 1 und der Anschlußleitungen 2, 3 bzw. mit einem zusätzlichen Anpaßkondensator angeschlossen. Über hochohmige Impedanzwandler 27, 28 werden schließlich die beiden Teilsignale $u_{D1}$ und $u_{D2}$ der hier nicht dargestellten Differenzbildungseinheit zugeführt.

Das Referenz-Ausgangssignal R wird hier aus dem vom Wandler nicht beeinflußten Signalzweig nach der Baugruppe 24 abge zweigt. Im nachfolgenden, rein kapazitiven Spannungsteiler, treten keine Phasendrehungen auf. Bis auf die Wirkung der piezoelektrischen Rückwirkung haben aufgrund der Symmetrie beider Zweige die Signale $u_{D1}$ und $u_{D2}$ gleiche Phasenlage. Um diese Phasenlage auch im Referenz-Ausgangssignal R zu erhalten, wird dieses wie beschrieben abgezweigt, oder könnte gleichwertig auch nach der Baugruppe 25 abgezweigt werden. Jedenfalls ist gewährleistet, daß die in Relation zum Referenz-Ausgangssignal R gemessene Signalamplitude des Differenz-Ausgangssignala bei entsprechender Abstimmung der beiden Teilsignale tatsächlich nur die piezoelektrische Rückwirkung des Wandlers 1 repräsentiert.

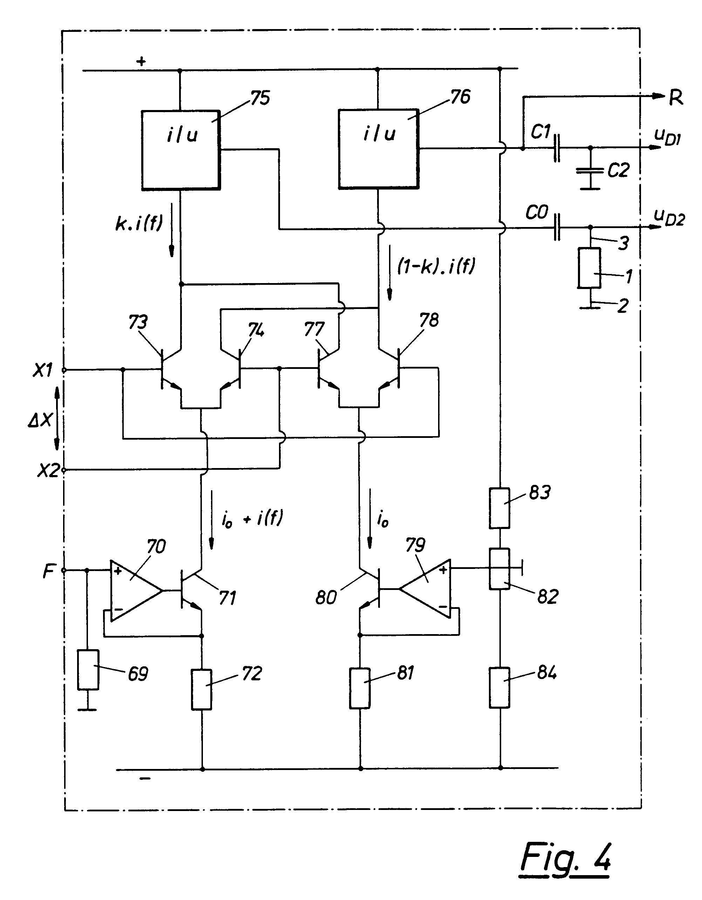

Anstelle der nur auf einen der beiden Teilsignalpfade einwirkenden Abstimmsteuerung nach Fig. 3 kann auch eine Abstimmung beider Teilsignale so vorgenommen werden, daß die Summe eine bestimmte Funktion erfüllt, vorzugsweise konstant ist. Eine entsprechende Ausbildung der Abstimmsteuerung zeigt Fig. 4.

Das Eingangssignal F wird gemäß Fig. 4 über den Abschlußwiderstand 69 auf Massepotential bezogen und über eine Präzisionsstromquelle in ein Stromsignal umgewandelt. Diese Präzisionsstromquelle wird gebildet aus einem Operationsverstärker 70 und einem angeschlossenen Transistor 71, der einen Emitterwiderstand 72 hat. Das aus dem Eingangssignal F gebildet Stromsignal enthält eine Gleichspannungskomponente $i_0$ und eine frequenzabhängige Stromkomponente $i(f)$ Dieser Strom wird gezogen aus einem Differenzverstärker aus zwei emittergekoppelten Transistoren 73, 74. Die beiden Emitterströme dieser beiden Transistoren 73, 74 müssen in Summe das Stromsignal $i_0$ + $i(f)$ ergeben. Die Aufteilung dieses Summenstromes erfolgt in Abhängigkeit von der angelegten Stellgrößenspannung $\Delta$ X oder X1 - X2 bzw. X2 - X1. An den Kollektoren der beiden Transistoren 73, 74 treten die beiden Teilströme auf, in Stromspannungswandlern 75 und 76 umgewandelt werden in Signalspannungen, die an die kapazitiven Spannungsteiler - im Referenzzweig C1 und C2 und im Meßzweig C0 und der Wandler 1 - gelegt werden. Und so wird das Ausgangssignal $u_{D1}$ und $u_{D2}$ gebildet.

Wie schon in der Fig. 3 wird das Referenzsignal R vor dem kapazitiven Spannungsteiler des Referenzzweiges abgezweigt.

Zur Kompensation von Regelschwingungen von X wird eine Zusatzeinrichtung benötigt. Regelischwingungen von X wirken sich in den Ausgangssignalen $u_{D1}$ und $u_{D2}$ gegenphasig aus, da sie über den durch die Transistoren 73 und 74 gebildeten Differenzverstärker gegenphasig verstärkt werden. Hingegen wirkt sich das Eingangssignal gleichphasig in den Ausgängen $u_{D1}$ und $u_{D2}$ aus, was das Problem aufwirft, daß die nachfolgende Substraktion das Frequenzsignal annähernd zum Verschwinden bringt, bis auf die piezoelektrische Rückwirkung des Wandlers, hingegen die Regelschwingungen von X mit hoher Verstärkung verstärkt, womit eine Kompensationseinrichtung benötigt wird. Diese besteht aus den beiden Transistoren 77 und 78 die so wie die Transistoren 73 und 74 emittergekoppelt aufgebaut sind, also ein Differenz-Transistorpaar bilden und ebenso angesteuert werden durch die Größen X1 und X2, also die Stellgröße $\Delta$ X. Mit Hilfe einer Präzisionsstromquelle bestehend aus dem Operationsverstärker 79, dem Transistor 80 und einem Emitterwiderstand 81 wird der mittlere Ruhestrom des Stromes $i_o$ + i(f) gebildet, also $i_o$. Dieser Ruhestrom $i_o$ wird im selben Aufteilungsverhältnis wie der Signalstrom $i_o$ + i(f) aufgeteilt und die beiden aufgeteilten Teilströme von $i_o$ werden so zu den Teilströmen von $i_o$ + i(f) addiert, daß eine Kompensation des Aufteilungsverhältnisses von $i_o$ erfolgt. Das Resultat ist, daß die Stromspannungswandler 75 und 76 nur mehr einen vom Abstimmverhältnis unabhängigen Ruhestrom $i_o$ erhalten und einen vom Abstimmverhältnis K beeinflußten Signalstrom i(f) sodaß die durch die Stromspannungswandler gebildeten Ausgangsgrößen $u_{D1}$ und $u_{D2}$ keine Regelschwingungen aus dem Ruhestrom $i_o$ mehr enthalten.

Die Präzisionsstromquelle zur Einstellung des Kompensationsruhestromes muß eingestellt werden. Das kann erfolgen durch einen Spannungsregler mit einem Potentiometer 82 zur Optimierung, das mit Vorwiderständen 83, 84 ausgeführt ist. Damit wird Spannung eingestellt, die umgesetzt wird in den Strom $i_o$ sodaß ein genauer Abgleich der Regelschwingungsunterdrückung erfolgen kann.

Die ganze Einheit wird mit einer positiven Versorgungsspannung (+) und einer negativen Versorgungsspannung (-) versorgt, da das Frequenzeingangssignal auf Null oder Massepotential bezogen ist.

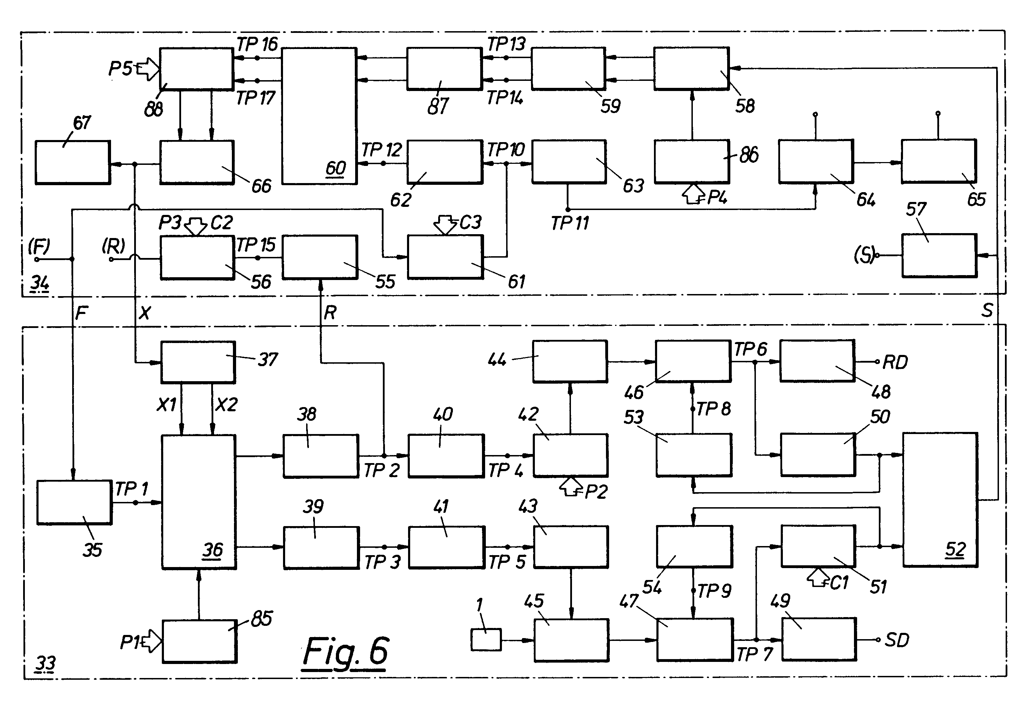

In Fig. 5 ist eine Einrichtung zum Betreiben eines piezoelektrischen Wandlers auf einer seiner Resonanzfrequenzen dargestellt. Ein spannungsgesteuerter Oszillator (Voltage Controled Oscillator - VCO) 29 liefert ein elektrisches Antriebssignal der steuerbaren Frequenz f die am Frequenzausgang 68 abgreifbar ist. Das Antriebssignal liegt weiters als Eingangssignal F an einem Resonanzdetektor 30, der beispielsweise ident wie die Anordnung nach Fig. 2 ausgeführt sein kann und zusätzlich nur noch die in Fig. 2 nicht dargestellte Auswerteeinheit mitumfaßt. Das die Resonazcharakteristik des wieder über die Leitungen 2, 3 angeschlossenen Wandlers 1 repräsentierende Meßsignal am Ausgang 31 des Resonazdetektors 30 ist einem Maximumregler 32 zugeführt, der auf bekannte und hier nicht näher interessierende Weise über ein Stellsignal $x_f$ Frequenz des spannungsgesteuerten Oszillators 29 so nachregelt, daß der Wandler 1 tatsächlich auf einer seiner Resonanzfrequenzen betrieben wird. Um eine bestimmte der Resonanzfrequenzen des Wandlers 1 zu halten, kann auch noch eine hier nicht weiter dargestellte Filtereinheit oder dergleichen vorgesehen werden. Die Funktion des Resonanzdetektors 30 ist wie erwähnt zur Anordnung nach Fig. 2 bereits ausführlich beschrieben, sodaß hier zur Vermeidung von Wiederholungen nicht weiter darauf eingegangen werden soll.

Die Anordnung nach Fig. 5 erlaubt mit sehr einfachen Mitteln den Aufbau eines Oszillators, der ansonsten bei den auftretenden geringen Koppelungen und den relativ großen Kabelkapazitäten und Elektrodenkapazitäten nur schwer realisierbar ist.

Die in Fig. 6 dargestellte Anordnung entspricht im wesentlichen der nach Fig. 2, nur daß hier nun etwas mehr ins Detail bezüglich des Schaltungsaufbaus gegangen wird. Die Schaltungsanordnung umfaßt zwei Platinen, den eigentlichen Detektor 33 und den Tuner 34 (Anmerkung: TP = Testpunkt). Der Detektor 33 enthält einen 50 Ohm-Abschluß für das Sinussignal F des nicht dargestellten Signalgenerators in Form eines Pi-Gliedabschwächers 35 (TP 1). Mit Hilfe eines Modulators 36, wie z.B. in Fig. 4 angegeben, erfolgt die Erzeugung und Abstimmung der Teilsignale für den Meßkanal und den Referenzkanal. Das Steuersignal bzw. die Stellgröße X wird in einem Differenzverstärker 37 an zwei Dioden logarithmiert, um eine linearisierte Charakteristik der Abstimmsteuerung zu erhalten. Mit Hilfe eines Potentiometers P 1 kann dabei über eine Kontrolleinheit 85 die Unterdrückung von Regelschwingungen des Steursignals X eingestellt werden.

Die Stromsignale der beiden Ausgänge des Modulators 36 werden in zwei diskret aufgebauten invertierenden Strom-Spannungs-Wandlern 38, 39 (TP 2 und TP 3) und in zwei ebenfalls diskret aufgebauten nicht-invertierenden Spannungsverstärkern 40, 41 (TP 4 und TP 5) verstärkt und zwei Hochpaß-Filtern 42, 43 zugeführt. Mit einem Potentiometer P 2 kann der Phasenunterschied zwischen Referenzkanal (TP 4) und Meßkanal (TP 5) im Niederfrequenzbereich auf Null abgestimmt werden.

Der kapazitive Spannungsteiler 44 des Referenzkanals ist z.B. mit zwei 100 pF-Kondensatoren aufgebaut. Der kapazitive Spannungsteiler 45 des Meßkanals besteht z.B. aus einem 100 pF Referenzkondensator und dem Wandler 1 samt Stecker und Kabel, der z.B. über einen 10 nF Kondensator angeschlossen wird. Die beiden Spannungssignale an den Ausgängen der Spannungsteiler 44, 45 werden nahezu leistungslos und extrem hochohmig von zwei nach dem Bootstrap-Prinzip arbeitenden diskret aufgebauten Impedanzwandlern 46, 47 abgegriffen (TP 6, TP 7). Zwei Operationsverstärker als Spannungsfolger 48, 49 entkoppeln die Hilfsausgänge RD (Reference-Drive) und SD (Signal-Drive).

Über zwei passive Tiefpaß-Filter 50, 51 werden die beiden Signale der Differenzbildungseinheit bzw. dem Subtrahierer 52 zugeführt. Mit dem Trimmkondensator C1 im Meßkanal kann der Phasenunterschied zwischen Referenzkanal (TP 6) und Meßkanal (TP 7) im Hochfrequenzbereich auf Null abgestimmt werden.

Zwei als PI-Regler 53, 54 beschaltete Operationsverstärker dienen zur Einstellung der DC-Arbeitspunkte der beiden Impedanzwandler 46, 47. Dabei wird der mittlere Spannungswert am Eingang des Subtrahierers 52 mit Null verglichen und die Abweichung zur Erzeugung einer Offset-Spannung (TP 8, TP 9) verwendet, die über die Bootstrap-Widerstände auf den Eingang des Impedanzwandlers 46, 47 wirkt.

Der Subtrahierer 52 besteht z.B. aus einem integrierten Differenzverstärker mit differentiellem Ausgang und einem als Substrahierer geschalteten Operationsverstärker, dessen Ausgangssignal S so wie das Referenzsignal R, das vom Testpunkt TP 2 abgezweigt wird, der zweiten Platine 34 zugeführt wird.

Das Referenz-Ausgangssignal R wird in einem aktiven Bandpaß 4. Ordnung 55, der z.B. mit einem Operationsverstärker als Spannungsfolger realisiert ist, von Brumm- und Rauschsignalen befreit (TP 15). Zur genauen Einstellung der Phasenlage relativ zum Differenz-Ausgangssignal S dient ein Filter 56, welches einen Hochpaß mit einem Potentiometer P 3 und einen Tiefpaß mit einem Trimmkondensator C 2 umfaßt.

Das Differenz-Ausgangssignal S wird ebenso wie das Referenz-Ausgangssignal R in einem aktiven Bandpaß 4. Ordnung 57 teilweise von Brumm- und Rauschsignalen befreit und über einen nicht dargestelten passiven Tiefpaß zum Ausgang geführt. Weiters wird das Signal S über Tiefpaß-Filter 58 als DC-Pegelumsetzer mit anschließendem FET-Spannungsfolger 59 (TP 13, TP 14) über Begrenzer 87 einem Demodulator 60 zugeführt. Mit dem Potentiometer P4 wird an einer Kontrolleinheit 85 die Feinabstimmung des DC-Arbeitspunktes und damit die Unterdrückung des Phasenreferenzsignals (TP 12) eingestellt.

Das Phasenreferenzsignal wird aus dem sinusförmigen Eingangssignal F des Signalgenerators gewonnen. Der Trimmkondensator C 3 dient zur Einstellung der Phasenverschiebung durch ein Allpaß-Filter 61 (TP 10), das z.B. mit einem Operationsverstärker aufgebaut ist. Mit Hilfe eines Komparators 62, der z.B. aus einem Operationsverstärker mit gegengekoppelten Dioden aufgebaut ist, wird aus dem Sinussignal mit der zum Differenz-Ausgangssignal S passend eingestellten Phasenlage das Phasenreferenzsignal (TP 12) erzeugt.

Das Eingangssignal F wird weiters beim Testpunkt TP 10 abgegriffen und über einen nicht dargestellten passiven Tiefpaß einem z.B. mit einem Operationsverstärker aufgebauten invertierenden Schmitt-Trigger 63 zugeführt. Wird dem Eingangssignal F eine negative DC-Spannung überlagert, so wird der Ausgang (TP 11) des Schmitt-Triggers 63 positiv, und umgekehrt. Das digitale Signal des Testpunktes TP 11 wird zwei invertierenden Transistorstufen 64, 65 zugeführt, deren Ausgänge z.B. für die Steuerung von Anzeigen oder dergleichen zur Verfügung stehen.

Mit einem Potentiometer P 5 wird an einer Kontrolleinheit 88 die DC-Spannungsdifferenz zwischen den beiden differentiellen Ausgängen (TP 16, TP 17) des Demodulators 60 eingestellt. Über einen passiven Tiefpaß - nicht dargestellt - wird diese Spannungsdifferenz von Frequenzanteilen befreit und einem differentiellen I-Regler 66, der z.B. mit einem Operationsverstärker aufgebaut ist, zugeführt. Das Ausgangssignal dieses Reglers 66 wird als Stellgröße X der Abstimmeinheit des Detektors 33 zugeführt.

Zur "Out-of-Range"-Anzeige 67 werden ebenfalls mit der Stellgröße X zwei gegensinnig gepolte Transistoren angesteuert, die als Kompensatoren arbeiten und ihrerseits Treiber für z.B. zwei Leuchtdioden in der Anzeige sind. Diese Anzeige wird aktiviert, sobald die elektrostatische Kapazität des zu prüfenden Wandlers samt Anschlußkabel nicht innerhalb eines bestimmten Bereiches liegt, da für diesen Fall die Abstimmung und damit die Messung nur mangelhaft durchgeführt werden kann.

**Patentansprüche**

1.  Meßverfahren zur Bestimmung von Schwingungseigenschaften eines piezoelektrichen Wandlers (1), wobei aus einem elektrischen Eingangssignal (F) mit veränderlich vorgebbarer Frequenz zwei aufeinander abzustimmende Teilsignale ($u_{D1}$, $u_{D2}$) gleicher Frequenz erzeugt werden, deren eines unabhängig und deren anderes abhängig von den elektromechanischen Eigenschaften des zu untersuchenden Wandlers (1) ist, und aus denen durch Differenz- bzw. Summenbildung ein Differenz-Ausgangssignal (S) erzeugt wird, welches relativ zu einem ebenfalls aus dem Eingangssignal (F) erzeugten Referenz-Ausgangssignal (R) gemessen wird, dadurch gekennzeichnet, daß die Abstimmung der beiden Teilsignale ($u_{D1}$, $u_{D2}$) bei der Messung ständig und mittels einer Soll-Istwertregelung des mit dem Referenz-Ausgangssignal (R) in Phase bzw. in Gegenphase liegenden Anteils des Differenz-Ausgangssignals (S) auf Null vorgenommen wird, und daß der verbleibende, im wesentlichen um 90 Grad zum Referenz-Ausgangssignal (R) phasenverschobene Anteil des Differenz-Ausgangssignals (S) als Maß für die Resonanzcharakteristik des Wandlers (1) dient.

2. Meßverfahren nach Anspruch 1, dadurch gekennzeichnet, daß zur Abstimmung beide Teilsignale ($u_{D1}$, $u_{D2}$) so verändert werden, daß die Summe konstant ist, daß weiters das Referenz-Ausgangssignal (R) aus einem der beiden abgestimmten Teilsignale erzeugt und bezüglich seiner Amplitude gemessen wird, und daß aus dem Verhältnis dieser Amplitude zur Amplitude des Eingangssignals (F) das Abstimmverhältnis ermittelt und zur numerischen Auswertung des Meßergebnisses verwendet wird.

3. Meßverfahren nach Anspruch 1 oder 2, dadurch gekennzeichnet, daß bei der Messung des verbleibenden Differenz-Ausgangssignals (S) nur der 90 Grad zum Referenz-Ausgangssignal (R) phasenverschobene Anteil gemessen wird.

4. Meßverfahren nach einem der Ansprüche 1 bis 3, dadurch gekennzeichnet, daß die Messung des verbleibenden Differenz-Ausgangssignals (S) schmalbandig bei der Frequenz (f) des Eingangssignals (F) vorgenommen wird.

5. Verwendung des Verfahrens nach einem oder mehreren der Ansprüche 1 bis 4 zum Betreiben eines piezoelektrischen Wandlers (1) auf einer seiner Resonanzfrequenzen, wobei der Wandler mit einem elektrischen Antriebssignal (F) von steuerbarer Frequenz versorgt wird, dadurch gekennzeichnet, daß aus dem Antriebssignal zwei aufeinander abzustimmende Teilsignagle ($u_{D1}$, $u_{D2}$) gleicher Frequenz erzeugt werden, deren eines unabhängig und deren anderes abhängig von den elektromechanischen Eigenschaften des Wandlers (1) ist, und aus denen durch Differenz- bzw. Summenbildung ein Differenz-Ausgangssignal (S) erzeugt wird, welches relativ zu einem ebenfalls aus dem Antriebssignal erzeugten Referenz-Ausgangssignal (R) gemessen wird, daß die Abstimmung der beiden Teilsignale während des Betriebes ständig und mittels einer Soll-Istregelung des mit dem Referenz-Ausgangssignal (R) in Phase bzw. in Gegenphase liegenden Anteils des Differenz-Ausgangssignals (S) auf Null vorgenommen wird, und daß der verbleibende Anteil des Differenz-Ausgangssignals bestimmt und mittels Regelung der Frequenz des Antriebssignals laufend maximiert wird.

6. Einrichtung zur Bestimmung von Schwingungseigenschaften eines piezoelektrischen Wandlers zur Durchführung des Verfahrens nach einem der Ansprüche 1 bis 4, mit einem Signalgenerator, der ein elektrisches Eingangssignal (F) mit veränderlich vorgebbarer Frequenz an eine Abstimmeinheit (14, 36) liefert, die aus dem Eingangssignal (F) zwei aufeinander abzustimmende Teilsignal ($u_{D1}$, $u_{D2}$) gleicher Frequenz erzeugt, deren eine unabhängig und deren anderes über den an der Abstimmeinheit (14, 36) angeschlossenen Wandler (1) abhängig von den elektromechanischen Eigenschaften des zu untersuchenden Wandlers (1) ist, einer damit in Verbindung stehenden Differenzbildungseinheit, (10', 52) die aus den beiden Teilsignalen ein Differenz-Ausgangssignal (S) erzeugt, einer Referenzeinheit, (13) die ebenfalls mit dem Signalgenerator in Verbindung steht und aus dem Eingangssignal (F) ein Referenz-Ausgangssignal (R) erzeugt, sowie einer Auswerteeinheit, die mit der Differenzbildungseinheit (10', 52) und der Referenzeinheit (13) verbunden ist, dadurch gekennzeichnet, daß die Abstimmeinheit (14, 36) mit einer selbsttätigen Regeleinheit (21, 66) verbunden ist, welche aus dem Vergleich der Istgröße des mit dem Referenz-Ausgangssignal (R) von der Referenzeinheit (13) in Phase bzw. in Gegenphase liegenden Anteils des Differenz-Ausgangssignals (S) der Differenzbildungseinheit (10', 52) mit der Sollgröße Null eine Stellgröße (X) für die Abstimmeinheit (14, 36) liefert.

7. Einrichtung nach Anspruch 6, dadurch gekennzeichnet, daß die Regeleinheit (21, 66) zur Zuführung der zur Regelung dienenden Istgröße mit einem Phasenmesser, vorzugsweise einem Synchron-Demodulator (16, 60) verbunden ist, der seinerseits mit der Differenzbildungseinheit (10', 52) zur Zuführung des Differenz-Ausgangssignals (S) in Verbindung steht.

8. Einrichtung nach Anspruch 6 oder 7, dadurch gekennzeichnet, daß die Regeleinheit (21, 66) im wesentlichen von einem Integralregler gebildet ist, der vorzugsweise zur Erhöhung seiner Stabilität und Schnelligkeit auch Proportional- und/oder Differentialanteile aufweist.

9. Einrichtung nach einem der Ansprüche 6 bis 8, dadurch gekennzeichnet, daß die Abstimmeinheit (14, 36) als eigentliches Abstimmelement eine mit der Regeleinheit verbundene Kapazitätsdiode enthält, deren Kapazität über die Stellgröße (X) veränderlich ist.

10. Einrichtung nach einem der Ansprüche 6 bis 8, dadurch gekennzeichnet, daß die Abstimmeinheit (14) als eigentliches Abstimmelement einen mit der Regeleinheit verbundenen Feldeffekt-Transistor (26) enthält, dessen Drain-Source-Widerstand über die Stellgröße (X) veränderlich ist.

11. Einrichtung nach Anspruch 6 bis 8, dadurch gekennzeichnet, daß die Abstimmeinheit als eigentliches Abstimmelement einen mit der Regeleinheit verbundenen Steilheitsverstärker enthält, dessen Verstärkung über die Stellgröße veränderlich ist.

12. Einrichtung nach einem der Ansprüche 6 bis 8, dadurch gekennzeichnet, daß die Abstimmeinheit (14, 36) als eigentliches Abstimmelement einen mit der Regeleinheit (21, 66) verbundenen, zwei emittergekoppelte Transistoren (73, 74) aurweisenden Differenzverstärker enthält, wobei die Stellgröße auf die Aufteilung eines dem Eingangssignal (F) erzeugten Stromsignal $(i_o + i(f))$ in die den beiden Teilsignalen $(u_{D1}, u_{D2})$ entsprechenden Emitterströme der zwei Transistoren (73, 74) des Differenzverstärkers wirkt.

13. Einrichtung nach Anspruch 12, dadurch gekennzeichnet, daß zwischen Regeleinheit (66) und Abstimmeinheit (36) eine Logarithmiereinheit (37) zur Aufbereitung der Stellgröße (X) eingeschaltet ist.

14. Einrichtung nach Anspruch 12 oder 13, dadurch gekennzeichnet, daß in der Abstimmeinheit (14, 36) dem genannten ersten zur Stromaufteilung dienenden Differenzverstärker ein zweiter, zwei weitere emitergekoppelte Transistoren (77, 78) umfassender Differenzverstärker parallel geschaltet ist, wobei in diesem ein Konstantstrom $(i_o)$, der dem mittleren Ruhestrom des aus dem Eingangssignal (F) erzeugten Stromsignals entspricht, im gleichen Verhältnis wie im ersten Differenzverstärker in zwei weitere Teilströme geteilt wird, die jeweils mit einem der beiden Teilströme des ersten Differenzverstärker additiv zusammengefaßt sind, sodaß die mittleren Ruheströme der beiden resultierenden Teilströme im wesentlichen unabhängig von einer durch die Regelung verursachten Änderung des Verhältnisses der Stromaufteilung sind.

15. Einrichtung nach einem der Ansprüche 6 bis 14, dadurch gekennzeichnet, daß dem Ausgang der Differenzbildungseinheit (10', 52) sowie dem Ausgang der Referenzeinheit (13) aufeinander abgestimmte Frequenzband-Filter nachgeschaltet sind.

**Claims**

1. Method of measurement for determining vibration characteristics of a piezo-electric transducer (1) in which, from an electrical input signal (F) of predetermined but variable frequency there are generated two part-signals $(u_{D1}, u_{D2})$ of the same frequency which are tuneable relative to one another and of which one is independent of and the other is dependent on the electromechanical characteristics of the transducer (1) under test, and from which by forming differences and/or sums a difference output signal (S) is generated, which is measured relative to a reference output signal (R) likewise derived from the input signal (F), characterised in that the tuning of the two part-signals $(u_{D1}, u_{D2})$ in the measurement is undertaken continuously and by means of a desired/actual value regulation to zero of the portion of the difference output signal (S) lying in phase or anti-phase with the reference output signal (R), and that the remaining portion of the difference output signal (R), and that the remaining portion of the difference output signal (S), shifted in phase through substantially 90° with respect to the reference output signal (R), serves as a measure for the resonance characteristic of the transducer (1).

2. Method of measurement according to Claim 1, characterised in that for tuning purposes both part-signals $(u_{D1}, u_{D2})$ are varied so that the sum is constant, that furthermore, the reference output signal (R) is derived from one of the two tuned part-signals and is measured with respect to its amplitude, and that from the relationship of this amplitude to the amplitude of the input signal (F) the tuning relationship is obtained and is used for numerical evaluation of the result of the measurement.

3. Method of measurement according to claim 1 or 2 characterised in that in the measurement of the remaining difference output signal (S) only the portion which differs in phase by 90° with respect to the reference output signal (R) is measured.

4. Method of measurement according to one of claims 1 to 3, characterised in that the measurement of the remaining difference output signal (S) is undertaken over a narrow band at the frequency (f) of the input signal (F)

5. The use of the method according to one or more of claims 1 to 4 for driving a piezo-electric transducer (1) to one of its resonance frequencies, the transducer being fed with an electric driving signal (F) of controllable frequency characterised in that there are derived from the driving signal two part-signals ($u_{D1}$, $u_{D2}$) which can be tuned in relation to one another and of which one is independent of and the other is dependent on the electromechanical characteristics of the transducer (1) and from which, by the formation of a difference and/or sum, there is derived a difference output signal (S) which is measured relative to a reference output signal (R) likewise derived from the driving signal, that the tuning of the two part-signals is undertaken during operation continuously and by means of an actual/desired regulation to zero of the portion of the difference output signal (S) which lies in phase or anti-phase with the reference output signal (R), and that the remaining portion of the difference output signal is determined and, by means of regulating the frequency of the driving signal, continuously maximised.

6. Device for determining vibration characteristics of a piezo-electric transducer for carrying out the method according to one of claims 1 to 4 with a signal generator which delivers an electric input signal (F) of predetermined but variable frequency to a tuning unit (14, 36) which derives from the input signal (F) two part-signals ($u_{d1}$, $u_{D2}$) which are tuneable in relation to one another and of which one is independent of and the other is dependent, through the transducer (1) connected to the tuning unit (14, 36), on the electrical characteristics of the transducer (1) under test, a difference-forming unit (10', 52) connected to it, which generates a difference output signal (S) from the two part-signals, a reference unit (13) which likewise is connected to the signal generator and derives from the input signal (F) a reference output signal (R), as well as an evaluating unit which is connected to the difference forming unit (10', 52) and the reference unit (13), characterised in that the tuning unit (14, 36) is connected to an automatic controlling unit (21, 66) which delivers an adjusting magnitude (X) for the tuning unit (14, 36) from comparing the actual value of the portion of the difference output signal (S) from the difference-forming unit (10', 52) that lies in phase or anti-phase with the reference output signal (R) from the reference unit (13) with the desired value of zero.

7. Device according to claim 6, characterised in that the controlling unit (21, 26) for supplying the actual value serving for the regulation is connected to a phase-measuring device, preferably a synchronous demodulator (16, 60), which in its turn is connected to the difference-forming unit (10', 52) for supplying the difference output signal (S).

8. Device according to claim 6 or 7, characterised in that the controlling unit (21, 66) is formed substantially by an integral controller which preferably also has proportional and/or differential components for increasing its stability and response time.

9. Device according to one of claims (6 to 8) characterised in that the tuning unit (14, 36) contains as the actual tuning element a variable capacitance diode which is connected to the controlling unit and of which the capacity is varied by the adjusting magnitude (X).

10. Device according to one of claims 6 to 8, characterised in that the tuning unit (14) contains as its actual tuning element a field-effect transistor (26) which is connected to the controlling unit and of which the drain-source resistance is varied by the adjusting magnitude (X).

11. Device according to claim 6 to 8, characterised in that the tuning unit contains as its actual tuning element a variable-mu amplifier which is connected to the controlling unit and of which the amplification is varied by the adjusting magnitude.

12. Device according to one of claims 6 to 8, characterised in that the tuning unit (14, 36) contains as its actual tuning element a difference amplifier comprising two emitter coupled transistors (73, 74) connected to the controlling unit (21, 66), the adjusting magnitude acting on the distribution of a current signal ($i_o$ + i(f)) derived from the input signal (F) in the emitter currents of the two transistors (73, 74) of the difference amplifier corresponding to the two part-signals ($u_{D1}$, $u_{D2}$).

13. Device according to claim 12, characterised in that a logarithm-deriving unit (37) is inserted between the controlling unit (66) and the tuning unit (36) for modifying the adjusting magnitude (X).

14. Device according to claim 12 or 13, characterised in that there is connected in the tuning unit (14, 36) to the stated first differential amplifier serving for distributing the currents a second differential amplifier in parallel and comprising two further emitter-coupled transistors (77, 78) and in this a constant current($i_o$) corresponding to the mean rest current of the current signal derived from the input signal (F) is divided into two further part-currents in the same ratio as in the first differential amplifier, these part-currents being respectively additively combined with one of the two part-currents from the first differential amplifier, so that the mean rest currents of the two resulting part-currents are substantially independent of any alteration, originating from the control, in the ratio of the current distribution.

15. Device according to one of claims 6 to 14, characterised in that mutually tuned frequency band filters are connected to, follow the output of the difference-forming unit (10', 52) as well as the output of the reference unit (13).

**Revendications**

1. Procédé de détermination des caractéristiques de vibration d'un transducteur piézoélectrique (1) dans lequel, à partir d'un signal électrique d'entrée (F) de fréquence variable et prédéterminable, sont déterminés deux signaux partiels de fréquence variable et susceptibles d'être déterminés à l'avance ($U_{D1}$, $U_{D2}$) qui sont à mettre en accord l'un avec l'autre, l'un desdits signaux étant indépendant et l'autre dépendant des caractéristiques électro-magnétiques du transducteur (1) soumis à essai, et à partir desquels un signal de sortie de différence (S) est généré par génération d'une différence ou d'une somme qui est mesurée relativement à un signal de sortie de référence (F) qui est également généré à partir du signal d'entrée (S), caractérisé en ce que l'accord de signaux partiel ($U_{D1}$, $U_{D2}$) est réalisé, lors des mesures, en réglant en permanence par comparaison de la valeur de consigne et de la valeur réelle, la partie du signal de sortie de différence (S) qui est en phase ou, respectivement, en opposition de phase, avec le signal de sortie de référence (R) à une valeur de zéro, et en ce que la partie du signal de sortie de différence (S) qui reste et qui est essentiellement décalé de phase de 90° par rapport au signal de sortie de référence (R) est utilisé en tant que mesure de la caractéristique de résonnance du transducteur (1).

2. Procédé de mesure selon la revendication 1, caractérisé en ce que, pour réaliser l'accord, les deux signaux partiels ($U_{D1}$, $U_{D2}$) sont variés de telle manière que la somme est constante, en ce que, de plus, le signal de sortie de référence (R) est généré à partir de l'un des deux signaux partiels en accord l'un avec l'autre et mesuré par rapport à son amplitude, et en ce que le rapport d'accord est obtenu à partir du rapport entre cette amplitude et l'amplitude du signal d'entrée (F), ce rapport d'accord étant utilisé pour interpréter numériquement le résultat de mesure.

3. Procédé de mesure selon les revendications 1 ou 2, caractérisé en ce que lors de la mesure de la partie qui reste du signal de sortie de différence (S), on n'utilise que la partie qui est décalée en phase de 90° par rapport-au signal de sortie de référence (R).

4. Procédé de mesure selon l'une des revendications 1 à 3, caractérisé en ce que la mesure de la partie qui reste du signal de sortie de différence (S) est réalisée en bande étroite à la fréquence (f) du signal d'entrée (F).

5. Application du procédé selon l'une ou plusieurs des revendications 1 à 4, pour l'excitation d'un transducteur piézo-électrique (1) à l'une de ses fréquences de résonnance, dans lequel le transducteur est alimenté avec un signal électrique d'excitation (F) de fréquence susceptible d'être commandée, caractérisé en ce que,

à partir du signal d'excitation, on génère deux signaux partiels ($U_{D1}$, $U_{D2}$) de même fréquence à accorder l'un à l'autre, l'un desdits signaux étant indépendant et l'autre dépendant des caractéristiques électro-magnétiques du transducteur (1) soumis à essai, et à partir desquels un signal de sortie de différence (S) est généré par génération d'une différence ou d'une somme qui est mesurée relativement à un signal de sortie de référence (R) qui est également généré à partir du signal d'excitation, en ce que l'accord des deux signaux partiel est réalisé, lors de l'excitation, en réglant en permanence à l'aide d'un réglage par valeur de consigne de la partie du signal de sortie de différence (S) qui est en phase ou, respectivement, en opposition de phase, avec le signal de sortie de référence (R) est amenée à une valeur de zéro, et en ce que la partie du signal de différence (S) qui reste est rendue maximale en permanence par réglage de la fréquence du signal d'excitation.

6. Dispositif pour la détermination des caractéristiques d'excitation d'un transducteur piézoélectrique pour la réalisation du procédé selon l'une des revendications 1 à 4, avec un générateur de signal fournissant un signal électrique d'entrée (F) ayant une fréquence variable et déterminable à l'avance, à un dispositif d'accord (14, 36), qui génère, a partir du signal d'entrée (F) deux signaux partiels ($U_{D1}$, $U_{D2}$) de même fréquence à accorder l'un à l'autre, l'un étant indépendant, et l'autre étant dépendant, à travers le transducteur (1) raccordé au dispositif d'accord (14, 36), des caractéristiques électromagnétiques du transducteur (1) dont les caractéristiques sont à déterminer, un dispositif de formation de différences (10', 52) qui y est relié et qui génère un signal de sortie de différence (S) à partir de signaux partiels, une unité de référence (13) qui est également reliée au générateur de signal et qui génère un signal de sortie de référence (R) à partir du signal d'entrée (F), ainsi qu'un dispositif d'interprétation qui est relié au dispositif de formation de différence (10', 52) et à l'unité de référence (13), caractérisé en ce que le dispositif d'accord (14, 36) est raccordé à une unité automatique de réglage (21, 66) qui fournit, à partir d'une comparaison de la valeur instantanée de la partie du signal de sortie de différence (S) du dispositif de formation des différences (10', 52) qui est en phase ou, respectivement, en opposition de phase avec le signal de sortie de référence (R) de l'unité de référence (13), avec une valeur de consigne de zéro, une valeur de réglage (X) destinée au dispositif d'accord (14, 36).

7. Dispositif selon la revendication 6, caractérisé en ce que l'unité de réglage (21, 66) est reliée, afin d'obtenir la valeur instantanée utilisée dans le réglage, à un dispositif de mesure de phase, de préférence un démodulateur synchrone (16, 60) qui, à son tour, est relié à un dispositif de formation de différence (10', 52) afin de pouvoir obtenir le signal de sortie de différence (S).

8. Dispositif selon la revendication 6 ou 7, caractérisé en ce que l'unité de réglage (21, 66) est essentiellement composée d'un dispositif de réglage à action intégrale qui, de préférence, incorpore également des parties proportionnelles et/ou différentielles afin d'augmenter sa stabilité et sa rapidité.

9. Dispositif selon l'une des revendications 6 à 8, caractérisé en ce que le dispositif d'accord (14, 36) comprend, en tant qu'élément d'accord, une diode à capacité variable raccordée à l'unité de réglage, dont la capacité peut être variée via la valeur de réglage (X).

10. Dispositif selon l'une des revendications 6 à 8, caractérisé en ce que le dispositif d'accord (14) comporte, en tant qu'élément d'accord, un transistor à effet de champ (26) raccordé à l'unité de réglage, dont la résistance Drain-Source peut être variée, via la valeur de réglage (X).

11. Dispositif selon l'une des revendications 6 à 8, caractérisé en ce que le dispositif d'accord comporte, en tant qu'élément d'accord, un amplificateur à transconductance relié à l'unité de réglage et dont l'amplification varie en fonction de la valeur de réglage.

12. Dispositif selon l'une des revendications 6 à 8, caractérisé en ce que le dispositif d'accord (14, 36) comporte, en tant qu'élément d'accord, un amplificateur différentiel comportant deux transistors (73, 74) à couplage d'émetteur, reliés à l'unité de réglage (21, 66), la valeur de réglage variant la division d'un signal de courant ($i_o + i(f)$) généré à partir du signal d'entrée (F) dans les courants d'émetteur, correspondants aux deux signaux partiels ($U_{D1}$, $U_{D2}$), des deux transistors (73, 74) de l'amplificateur différentiel.

13. Dispositif selon la revendication 12, caractérisé en ce que une unité logarithmique (37) est disposée entre l'unité de réglage (66) et le dispositif d'accord (36) pour la préparation de la valeur de réglage (X).

14. Dispositif selon la revendication 12 ou 13, caractérisé en ce que dans le dispositif d'accord (14, 36), un deuxième amplificateur différentiel comprenant deux transistors supplémentaires (77, 78) à couplage d'émetteur est branché en parallèle avec ledit premier amplificateur différentiel réalisant la division du courant, ce deuxième amplificateur différentiel réalisant la division d'un courant constant ($i_o$) qui correspond au courant de repos moyen du signal de courant obtenu à partir du signal d'entrée (F) et dans le même rapport que celui du premier amplificateur différentiel, en deux courants partiels supplémentaires qui sont respectivement mis ensembles de façon additive avec l'un des deux courants partiels du premier amplificateur différentiel de manière à ce que les courants de repos moyens des deux courants partiels résultants soient essentiellement indépendants d'un changement du rapport de division de courant réalisé par le réglage.

15. Dispositif selon l'une des revendications 6 à 14, caractérisé en ce que des filtres à bande de fréquence, accordés l'un à l'autre, sont raccordés en aval de la sortie de l'unité de formation de différence (10', 52) et de la sortie de l'unité de référence (13).

_Fig.1_

_Fig. 2_

*Fig. 3*

*Fig. 5*

_Fig. 4_

_Fig. 6_